# DEMANDE DE BREVET EUROPEEN

(11) **EP 4 822 932 A1**
(43) Date de publication de la demande: **14.10.2026**
(21) Numéro de dépôt: 26171519.7
(22) Date de dépôt: 09.04.2026
(51) Int. Cl.: H02J 1/082

(54) **CIRCUIT D'ALIMENTATION**

(30) Priorité: 11.04.2025 FR 2503916
(71) Demandeur: STMicroelectronics International N.V., 1228 Plan-les-Ouates, Geneva (CH)
(72) Inventeur: NONIER, Pascal, 38330 SAINT-ISMIER (FR); GOULIER, Julien, 38000 GRENOBLE (FR); MERCIER, Julien, 13105 MIMET (FR); MONTAUDON, Franck, 38240 MEYLAN (FR); JOISSON, Marc, 38320 BRIE ET ANGONNES (FR)
(74) Mandataire: Cabinet Beaumont

(57) **Abrégé**

La présente description concerne un circuit d'alimentation d'un dispositif électronique adapté à recevoir de l'énergie de la part d'une première source d'énergie et d'une deuxième source d'énergie (VCC100), comprenant :
- un premier circuit de sélection (121) de source d'énergie adapté à recevoir de l'énergie de la part de la première source d'énergie et de la deuxième source d'énergie, et à fournir une première tension d'alimentation (VCCint120) et un signal (VCC_path120) indiquant la source d'énergie fournissant ladite première tension d'alimentation (VCCint120) ; et
- un deuxième circuit (122) adapté à comparer ladite première tension d'alimentation (VCCint120) à une première tension de référence ou à une deuxième tension de référence en fonction d'une valeur dudit signal (VCC_path120), si ladite première tension d'alimentation (VCCint120) est supérieure à ladite première ou deuxième tension de référence, alors ladite première tension d'alimentation (VCCint120) est utilisée pour l'alimentation du dispositif électronique.

## Description

### Domaine technique

La présente description concerne de façon générale les systèmes et dispositifs électroniques, et en particulier, l'alimentation en énergie de ces systèmes et dispositifs électroniques. La présente description se rapporte plus précisément à un circuit d'alimentation adapté à recevoir de l'énergie de la part de deux sources d'énergie différente.

### Technique antérieure

Il est de plus en plus répandu de pouvoir alimenter un dispositif électronique avec plusieurs sources d'énergie différente, comme par exemple une source d'énergie filaire et une source d'énergie sans fil.

La gestion de plusieurs sources d'alimentation différentes peut entraîner différentes contraintes qui sont généralement gérées par un circuit de gestion d'alimentation, ou un circuit d'alimentation.

Il serait souhaitable de pouvoir améliorer, au moins en partie, certains aspects des circuits d'alimentation adaptés à recevoir de l'énergie de la part de deux sources d'énergie différente.

### Résumé de l'invention

Il existe un besoin pour des circuits d'alimentation plus performants.

Il existe un besoin pour des circuits d'alimentation adaptés à gérer plusieurs sources d'alimentation plus performants.

Il existe un besoin pour des circuits d'alimentation adaptés à gérer plusieurs sources d'alimentation qui ne fournissent pas des mêmes quantités d'énergie.

Il existe un besoin pour des procédés d'alimentation de dispositifs électroniques utilisant de tels circuits d'alimentation.

Il existe un besoin pour des dispositifs comprenant de tels circuits d'alimentation.

Un mode de réalisation pallie tout ou partie des inconvénients des circuits d'alimentation connus.

Un mode de réalisation pallie tout ou partie des inconvénients des procédés d'alimentation connus de dispositifs électroniques.

Un mode de réalisation prévoit un circuit d'alimentation d'un dispositif électronique adapté à recevoir de l'énergie de la part d'une première source d'énergie et de la part d'une deuxième source d'énergie différente de la première source d'énergie, ledit circuit d'alimentation comprend :
- un premier circuit de sélection de source d'énergie adapté à recevoir de l'énergie de la part de la première source d'énergie et de la deuxième source d'énergie, et à fournir une première tension d'alimentation et un signal indiquant la source d'énergie fournissant ladite première tension d'alimentation ; et
- un deuxième circuit adapté à comparer ladite première tension d'alimentation à une première tension de référence ou à une deuxième tension de référence en fonction d'une valeur dudit signal, si ladite première tension d'alimentation est supérieure à ladite première ou deuxième tension de référence, alors ladite première tension d'alimentation est utilisée pour l'alimentation du dispositif électronique.

Un autre mode de réalisation prévoit un procédé d'alimentation d'un dispositif électronique adapté à recevoir de l'énergie de la part d'une première source d'énergie et de la part d'une deuxième source d'énergie différente de la première source d'énergie, utilisant un circuit d'alimentation comprenant :
- un premier circuit de sélection de source d'énergie adapté à recevoir de l'énergie de la part de la première source d'énergie et de la deuxième source d'énergie, et à fournir une première tension d'alimentation et un signal indiquant la source d'énergie fournissant ladite première tension d'alimentation ; et
- un deuxième circuit adapté à comparer ladite première tension d'alimentation à une première tension de référence ou à une deuxième tension de référence en fonction d'une valeur dudit signal, si ladite première tension d'alimentation est supérieure à ladite première ou deuxième tension de référence , alors ladite première tension d'alimentation est utilisée pour l'alimentation du dispositif électronique.

Selon un mode de réalisation, la première source d'énergie est une source d'énergie sans fil.

Selon un mode de réalisation, la deuxième source d'énergie est une source d'énergie filaire.

Selon un mode de réalisation, ladite première tension de référence est associée à la première source d'alimentation.

Selon un mode de réalisation, ladite deuxième tension de référence est associée à la deuxième source d'alimentation.

Selon un mode de réalisation, lorsque ledit signal indique que ladite première tension d'alimentation est fournie par la première source d'alimentation, alors le deuxième circuit compare ladite première tension d'alimentation à ladite première tension de référence.

Selon un mode de réalisation, lorsque ledit signal indique que ladite première tension d'alimentation est fournie par la deuxième source d'alimentation, alors le deuxième circuit compare ladite première tension d'alimentation à ladite deuxième tension de référence.

Selon un mode de réalisation, ledit circuit d'alimentation comprend, en outre, un régulateur de tension adapté à convertir ladite première tension d'alimentation en une deuxième tension d'alimentation.

Selon un mode de réalisation, ladite deuxième tension d'alimentation est inférieure à la première tension d'alimentation.

Selon un mode de réalisation, ledit régulateur de tension est adapté à recevoir ledit signal et à modifier la valeur de la deuxième tension d'alimentation en fonction de la valeur transmise par ledit signal.

Selon un mode de réalisation, ledit circuit d'alimentation comprend, en outre, un circuit à bande interdite adapté à fournir la première tension de référence et la deuxième tension de référence .

Un autre mode de réalisation prévoit un dispositif électronique comprenant un circuit d'alimentation décrit précédemment.

Selon un mode de réalisation, le dispositif comprend, en outre, une mémoire adaptée à recevoir ledit signal et comprenant des pompes de charges dont le fonctionnement est modifié par une valeur dudit signal.

Selon un mode de réalisation, le dispositif comprend, en outre, un générateur de signal d'horloge adapté à recevoir ledit signal.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente un mode de réalisation d'un dispositif électronique comprenant un mode de réalisation d'un circuit d'alimentation ;
la figure 2 représente un exemple pratique de réalisation d'une partie du mode de réalisation de la figure 1 ;
la figure 3 représente un exemple pratique de réalisation d'une autre partie du mode de réalisation de la figure 1 ;
la figure 4 représente un exemple pratique de réalisation d'encore une autre partie du mode de réalisation de la figure 1 ; et
la figure 5 représente un exemple pratique de réalisation d'encore une autre partie du mode de réalisation de la figure 1.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

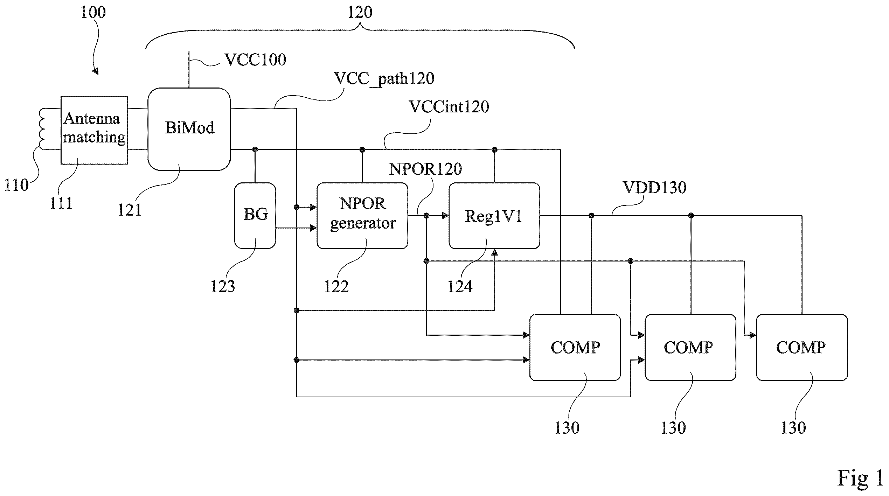

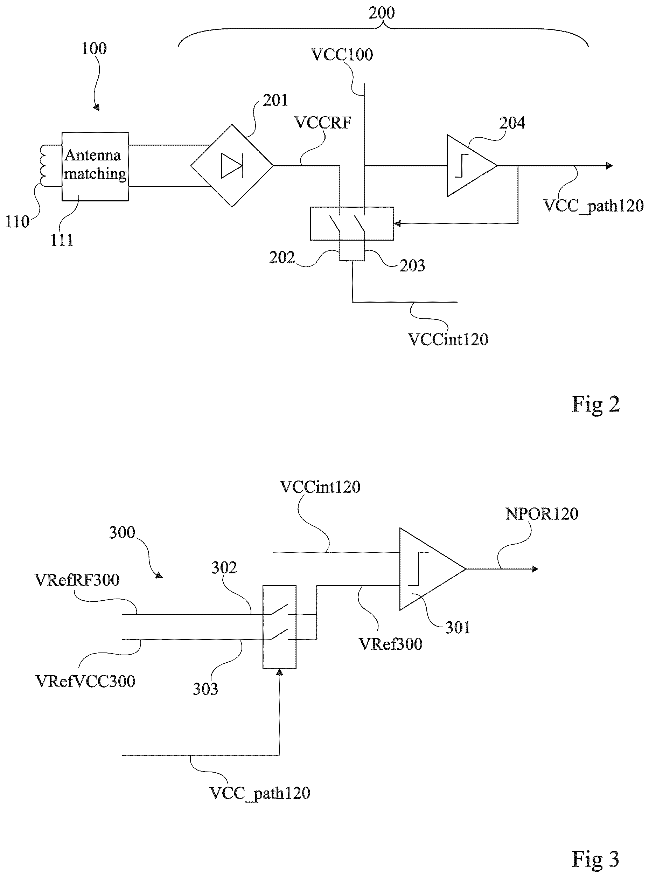

Les modes de réalisation décrits ci-après concernent un circuit d'alimentation d'un dispositif électronique adapté à être alimenté par deux sources d'énergie différentes, comme, par exemple, une source d'énergie filaire et une source d'énergie sans fil. Les modes de réalisation décrits ci-après permettent de gérer différentes sources d'énergie ne fournissant pas les mêmes niveaux d'énergie de façon fiable. Pour cela, le circuit d'alimentation comprend un circuit adapté à vérifier qu'un niveau de tension généré à partir de ces sources d'alimentation est suffisant dépendant de la source d'énergie utilisée. Un tel circuit d'alimentation est décrit en relation avec la figure 1, et des exemples pratiques de réalisation de certains de ces éléments sont décrits en relation avec les figures 2 à 5.

De plus, les modes de réalisation décrits ci-après sont tout particulièrement adaptés à être utilisés dans le domaine bancaire, le domaine de l'identification, par exemple pour des identifications d'identité basée sur l'utilisation d'un passeport ou d'une carte d'identité, le domaine de l'internet des objets, et le domaine du transport.

De plus, de manière plus générale, les modes de réalisation décrits ci-dessus sont particulièrement adaptés pour être utilisés dans tout type de marchés industriels où une alimentation d'un dispositif électronique par plusieurs sources d'alimentation différentes est utilisée. Plus particulièrement, un tel circuit d'alimentation peut être destiné à :
- l'industrie automobile, par exemple dans le domaine de l'électrification automobile ou dans le domaine des systèmes avancés d'aide à la conduite (Advanced Driver Assistance Systems - ADAS) ;
- le secteur industriel, par exemple dans le domaine de l'énergie verte, dans le domaine de l'électrification des infrastructures, de l'internet des objets (Internet of Things
- IoT) et des maisons intelligentes (SmartHome), où la consommation d'électricité et d'énergie et l'échange de données sont des éléments clés ;
- l'industrie de l'électronique personnelle, par exemple dans le domaine de la téléphonie mobile et de l'internet des objets (Internet of Things - IoT), ainsi que dans le domaine des interfaces haut débit ; et
- l'industrie des équipements de communication, des ordinateurs et des périphériques, par exemple dans le domaine des infrastructures et des centres de données (Data Centers), et dans le domaine des satellites en orbite terrestre basse (Low Earth Orbit - LEO).

La figure 1 représente une partie d'un dispositif électronique 100 comprenant une antenne 110, un circuit d'alimentation 120 et un ou plusieurs composants électroniques 130.

Selon un mode de réalisation, le dispositif électronique 100, et en particulier son circuit d'alimentation 120, est adapté à recevoir de l'énergie de la part de plusieurs sources d'énergie différente, par exemple au moins deux sources d'énergie différente. Ces sources d'énergie peuvent être des sources d'énergie filaire, par exemple reliée au secteur, des sources d'énergie internes, par exemple une batterie, des sources d'énergie sans fil, par exemple nécessitant l'utilisation d'une antenne ou d'un autre outil de communication sans fil etc. D'autres types de sources d'énergie peuvent être évidente à la personne du métier.

Dans l'exemple représenté en figure 1, le dispositif 100 est adapté à recevoir de l'énergie de la part d'une première source d'énergie sans fil grâce à l'antenne 110, et est adapté à recevoir l'énergie de la part d'une deuxième source d'énergie filaire par l'intermédiaire d'une tension VCC100 reçue directement par le circuit d'alimentation 120.

Selon un exemple, le dispositif 100 comprend l'antenne 110 et un circuit d'adaptation d'impédance 111 (Antenna Matching) de l'antenne 110. En figure 1, l'antenne 110 est représenté par une bobine dont les deux bornes sont reliées, de préférence connectées, à deux entrées du circuit d'adaptation d'impédance 111. Selon un exemple pratique, l'antenne 110 peut être adaptée, et en particulier dimensionnée, pour la mise en oeuvre d'une communication sans fil utilisant un champ radiofréquence, comme par exemple une communication en champ proche (NFC, Near field communication).

Selon un mode de réalisation, le circuit d'alimentation 120 du dispositif 100 comprend un circuit de sélection 121 (BiMod) de source d'énergie adapté à recevoir de l'énergie de la part des sources d'énergie du dispositif 100. Ainsi, dans l'exemple représenté en figure 1, le circuit de sélection 121 est adapté à recevoir de l'énergie de la part de l'antenne 110 et à recevoir la tension VCC100 de la source d'énergie filaire. Encore plus particulièrement, pour cela, le circuit de sélection 121 comprend deux premières entrées reliées, de préférence connectées, à des sorties du circuit d'adaptation d'impédance 111 de l'antenne 110, et une deuxième entrée adaptée à recevoir la tension VCC100. Un exemple pratique de réalisation du circuit de sélection 121 est décrit en relation avec la figure 2.

Selon un mode de réalisation, le circuit de sélection 121 est adapté à fournir, en sortie, une tension d'alimentation interne VCCint120 et un signal VCC_path120 indiquant la source d'énergie fournissant cette tension d'alimentation. Plus particulièrement, le signal VCC_path120 est adapté à indiquer par une valeur qu'il transmet que la tension VCCint120 est fournie à partir de l'énergie de la première ou de la deuxième source d'énergie.

Selon un mode de réalisation, le circuit d'alimentation 120 comprend un circuit 122 (NPOR generator) adapté à recevoir la tension d'alimentation interne VCCint120 et le signal VCC_path120. Selon un mode de réalisation, le circuit 122 est adapté à vérifier les caractéristiques de la tension d'alimentation interne VCCint120 et à les comparer avec des caractéristiques de référence des tensions fournies par les sources d'alimentation du dispositif 100. Selon un exemple, le circuit 122 est adapté à comparer l'amplitude de la tension d'alimentation VCCint120 avec des amplitudes de tension de référence en prenant en compte la valeur transmise par le signal VCC_path120. Un exemple pratique de réalisation du circuit 122 est décrit en relation avec la figure 2.

Plus particulièrement, dans le cas représenté en figure 1, si la valeur transmise par le signal VCC_path120 indique que la tension d'alimentation interne VCCint120 provient de la source d'énergie sans fil, alors l'amplitude de la tension VCCint120 est comparée à une tension de référence VRefRF100 associée à la source d'énergie sans fil. De façon similaire, et toujours dans le cas illustré en figure 1, si la valeur transmise par le signal VCC_path120 indique que la tension d'alimentation interne VCCint120 provient de la source d'énergie filaire, alors l'amplitude de la tension VCCint120 est comparée à une tension de référence VRefVCC100 associée à la source d'énergie filaire.

Selon un exemple, le circuit 122 est adapté à fournir, en sortie, un signal NPOR120 configuré pour indiquer si les caractéristiques de la tension d'alimentation interne VCCint120 sont conformes ou non. Selon un exemple, le signal NPOR120 est adapté à transmettre une valeur indiquant si les caractéristiques de la tension d'alimentation interne VCCint120 sont conformes ou non.

Selon un exemple, le circuit d'alimentation 120 comprend, en outre, un circuit à bande interdite 123 (BG), ou circuit de band gap, adapté à fournir les diverses tensions de référence nécessaires au fonctionnement du circuit 122. Selon un exemple, le circuit 123 est adapté à recevoir la tension d'alimentation de référence et à fournir les tensions de référence. Plus particulièrement, dans le cas illustré en figure 1, le circuit 123 est adapté à fournir les tensions de référence VRefRF100 et VRefVCC100 au circuit 122.

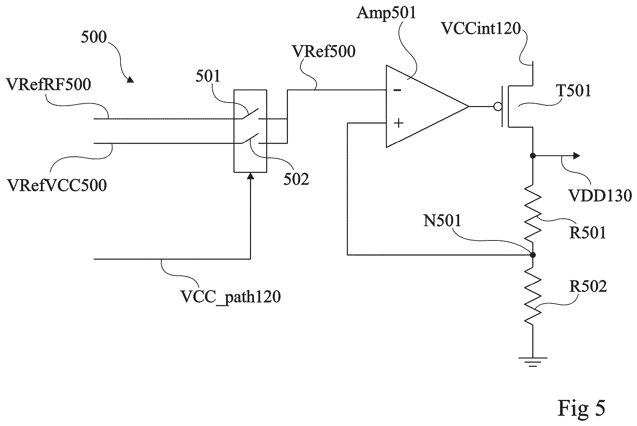

Selon un exemple, le circuit d'alimentation 120 comprend, en outre, au moins un régulateur de tension 124 (Reg 1V1) adapté à recevoir la tension d'alimentation interne VCCint120 et le signal NPOR120, et à fournir une tension d'alimentation VDD130, par exemple inférieure à la tension d'alimentation interne VCCint120, adaptée à alimenter les composants 130 du dispositif 100. Selon un exemple, la valeur transmise par le signal NPOR120 permet d'autoriser le régulateur 124 à fonctionner. Si le dispositif 100 nécessitent plusieurs tensions d'alimentation d'amplitude différentes, le dispositif 100 peut comprendre plusieurs régulateurs de tension du type du régulateur de tension 124. Selon un mode de réalisation, le niveau de tension de la tension d'alimentation VDD130 peut être variable en fonction de la source d'énergie choisie. Plus particulièrement, le régulateur de tension de tension 124 peut recevoir le signal VCC_path120 et modifier la valeur de la tension d'alimentation VDD130 en fonction d'une valeur transmise par le signal VCC_path120. Un exemple pratique de réalisation du régulateur de tension 124 est décrit en relation avec la figure 5. D'autres exemples pratiques de mise en oeuvre du régulateur 124 sont à la portée de la personne du métier.

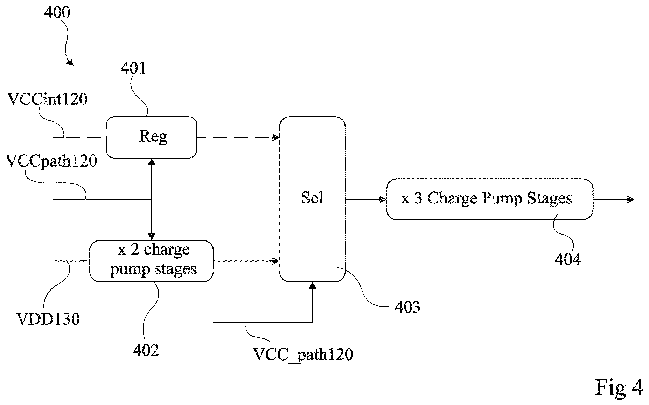

Selon un exemple, le dispositif 100 comprend des composants électroniques 130 (COMP) adaptés à être alimentés par le circuit d'alimentation 120 et à recevoir, selon le cas, la tension d'alimentation interne VCCint120 et/ou une tension d'alimentation régulée comme, par exemple, la tension d'alimentation VDD130. Selon un exemple, certains des, ou tous les, composants électroniques 130 sont adaptés à recevoir les signaux VCC_path120 et NPOR120 et à prendre en compte les valeurs qu'ils transmettent. Certains composants électroniques 130, comme par exemple des mémoires ou des générateurs de signaux d'horloge, peuvent ainsi adapter leur fonctionnement à la source d'énergie utilisée par le dispositif 100. Un exemple particulier d'une mémoire est décrit en relation avec la figure 4.

Selon un mode de réalisation, le fonctionnement du circuit d'alimentation 120 est le suivant. Ce fonctionnement correspond à un procédé d'alimentation du dispositif 100.

Lorsque la source d'énergie filaire est la seule à disposition, le dispositif 100 est alimentée par cette source d'énergie. Dans ce cas, le circuit de sélection 121 fournit la tension d'alimentation interne VCCint120 à partir de la tension VCC100. Le circuit 122 vérifie alors si la tension VCCint120 est conforme en la comparant, par exemple, à la tension de référence VRefVCC100, puis transmet cette information aux composants électroniques 130 et, le cas échéant, au régulateur de tension 124.

Lorsque la source d'énergie sans fil est la seule à disposition, le dispositif 100 est alimentée par cette source d'énergie. Dans ce cas, le circuit de sélection 121 fournit la tension d'alimentation interne VCCint120 à partir d'une tension récoltée par l'antenne 110. Le circuit 122 vérifie alors si la tension VCCint120 est conforme en la comparant, par exemple, à la tension de référence VRefRF100, puis transmet cette information aux composants électroniques 130 et, le cas échéant, au régulateur de tension 124.

Lorsque plusieurs sources d'énergie sont à disposition, le dispositif 100 peut être alimentée aussi bien par l'une que par l'autre. Un choix est alors fait sur la base de règle de priorité. Selon un exemple, une source d'énergie filaire peut être toujours utilisée par défaut.

Ces modes de réalisation sont particulièrement utiles pour adapter les performances du dispositif 100 en ajustant le fonctionnement des composants électroniques 130 en fonction de la source d'énergie disponible, par exemple la source d'énergie filaire ou l'énergie récoltée par l'antenne.

La figure 2 représente un exemple pratique de réalisation d'un circuit de sélection 200 du type du circuit de sélection 121 décrit en relation avec la figure 1.

En figure 2, sont aussi représentés l'antenne 110 et le circuit d'adaptation d'impédance 111 (Antenna Matching) du dispositif 100 décrit en relation avec la figure 1.

Le circuit de sélection 200 est adapté à choisir une source d'énergie parmi la source d'énergie sans fil et la source d'énergie filaire décrites en relation avec la figure 1, et à fournir la tension d'alimentation interne VCCint120 décrite en relation avec la figure 1.

Selon un exemple, le circuit de sélection 200 comprend un pont redresseur de tension 201 adapté à recevoir une tension alternative récoltée par l'antenne 110. Pour cela, le pont redresseur de tension 201 comprend deux entrées reliées, de préférence connectées, aux sorties du circuit d'adaptation d'impédance 111, et fournit, en sortie, une tension redressée VCCRF. Selon un exemple, le pont redresseur de tension 201 est un pont de diode bien connu de la personne du métier.

Selon un exemple, le circuit de sélection 200 comprend, en outre, deux interrupteurs 202 et 203. Ces deux interrupteurs sont adaptés à fournir la tension d'alimentation interne VCCint120 à partir des tensions VCCRF et VCC100. Plus particulièrement, l'interrupteur 202 est adapté à recevoir, sur une de ses bornes de conduction la tension VCCRF, et à fournir sur son autre borne de conduction, la tension VCCint120. De façon similaire, l'interrupteur 203 est adapté à recevoir, sur une de ses bornes de conduction la tension VCC100, et à fournir sur son autre borne de conduction, la tension VCCint120. Les bornes de commande des interrupteurs sont adaptés à recevoir des signaux de commande de sélection des sources d'énergie. Selon un exemple, les signaux de commande des interrupteurs 202 et 203 sont le signal VCC_path120 décrit en relation avec la figure 1. La technologie et le dimensionnement des interrupteurs 202 et 203 sont accessibles à la personne du métier.

Selon un exemple, le circuit de sélection 200 comprend, en outre, un comparateur 204 adapté à fournir, en sortie, le signal VCC_path120. Selon un exemple, le comparateur 204 reçoit en entrée la tension VCC100 et la compare à une tension de seuil. Si la tension VCC100 est supérieure à la tension de seuil alors la source d'alimentation filaire est choisie, sinon c'est la source d'alimentation sans fil qui est choisie. Selon un exemple préféré, la tension de seuil est une tension de comparaison interne du comparateur 204.

La figure 3 représente un exemple pratique de réalisation d'un circuit de sélection 300 du type du circuit 122 décrit en relation avec la figure 1.

Le circuit 300 est adapté à recevoir la tension VCCint120 et à la comparer avec des tensions de référence en fonction d'une valeur transmise par le signal VCC_path120 décrit en relation avec la figure 1.

Selon un exemple, le circuit 300 comprend un comparateur 301 adapté à comparer la tension VCCint120 avec une tension de référence VRef300, et à fournir, en sortie, le signal NPOR120 décrit en relation avec la figure 1.

Selon un exemple, le circuit de sélection 300 comprend, en outre, deux interrupteurs 302 et 303 adaptés à fournir la tension de référence VRef300 à partir de tensions de référence VRefRF300 et VRefVCC300, ces tensions de référence sont, par exemple, les tensions de référence VRefRF100 et VRefVCC100 décrites en relation avec la figure 1, ou sont alors des tensions de référence fournies par un circuit du type du circuit 123 décrit en relation avec la figure 1. Plus particulièrement, l'interrupteur 302 est adapté à recevoir, sur une de ses bornes de conduction la tension VRefRF300, et à fournir sur son autre borne de conduction, la tension VRef300. De façon similaire, l'interrupteur 303 est adapté à recevoir, sur une de ses bornes de conduction la tension VRefVCC300, et à fournir sur son autre borne de conduction, la tension VRef300. Les bornes de commande des interrupteurs 302 et 303 sont adaptés à recevoir des signaux de commande. Selon un exemple, les signaux de commande des interrupteurs 302 et 303 sont le signal VCC_path120 décrit en relation avec la figure 1. La technologie et le dimensionnement des interrupteurs 302 et 303 sont accessibles à la personne du métier.

La figure 4 représente un exemple pratique de réalisation d'une partie d'un composant électronique 400 du type des composants électroniques 130 décrits en relation avec la figure 1.

Selon un mode de réalisation, le composant électronique 400 est une mémoire, et, en particulier, par exemple, une mémoire non volatile. La partie illustrée en figure 4 est une partie d'alimentation de la mémoire comprenant des étages élévateurs de tension (Charge pump stages).

Selon un exemple, la partie 400 comprend un régulateur 401 (Reg) adapté à recevoir la tension d'alimentation interne VCCint120 et le signal VCC_path120.

Selon un exemple, la partie 400 comprend, en outre, des premiers étages élévateurs de tension 402 (x2 charge pump stages) adaptés à recevoir la tension d'alimentation VDD130 décrite en relation avec la figure 1 et le signal VCC_path120. Les étages élévateurs de tension 402 sont adaptés à fonctionner en étant uniquement alimentés par la tension d'alimentation VDD130.

Selon un exemple, la partie 400 comprend, en outre, un circuit de sélection 403 adapté à recevoir la sortie du régulateur 401 et la sortie des premiers étages élévateurs de tension 402, et adapté à être commandé par le signal VCC_path120.

Selon un exemple, la partie 400 comprend, en outre, des deuxièmes étages élévateurs de tension 404 (x3 charge pump stages) adaptés à recevoir une tension de sortie du circuit de sélection 403. Les étages élévateurs de tension 404 sont adaptés à fonctionner uniquement lorsque la tension de sortie du circuit 403 est supérieure à la tension d'alimentation VDD130.

La figure 5 représente un exemple pratique de réalisation d'un circuit de sélection 300 du type du circuit 122 décrit en relation avec la figure 1.

Le régulateur de tension 500 est adapté à recevoir, en entrée, la tension d'alimentation interne VCCint120 et à fournir, en sortie, la tension d'alimentation VDD130 décrite en relation avec la figure 1. La particularité du régulateur de tension 500 est qu'il est capable d'adapté la valeur de la tension d'alimentation VDD130 en fonction de la source d'énergie choisi.

Selon un exemple, le régulateur 500 comprend, en outre, deux interrupteurs 501 et 502 adaptés à fournir une tension de référence VRef500 à partir de tensions de référence VRefRF500 et VRefVCC500, ces tensions de référence sont, par exemple, les tensions de référence VRefRF100 et VRefVCC100 décrites en relation avec la figure 1, ou sont alors des tensions de référence fournies par un circuit du type du circuit 123 décrit en relation avec la figure 1. Plus particulièrement, l'interrupteur 501 est adapté à recevoir, sur une de ses bornes de conduction la tension VRefRF500, et à fournir sur son autre borne de conduction, la tension VRef500. De façon similaire, l'interrupteur 502 est adapté à recevoir, sur une de ses bornes de conduction la tension VRefVCC500, et à fournir sur son autre borne de conduction, la tension VRef500. Les bornes de commande des interrupteurs 501 et 502 sont adaptés à recevoir des signaux de commande. Selon un exemple, les signaux de commande des interrupteurs 501 et 502 sont le signal VCC_path120 décrit en relation avec la figure 1. La technologie et le dimensionnement des interrupteurs 501 et 502 sont accessibles à la personne du métier.

Selon un exemple, le régulateur 500 comprend, en outre, un amplificateur différentiel Amp501 et un interrupteur T501. Selon un exemple, l'interrupteur T501 est un transistor, par exemple un transistor à effet de champ à grille métal-oxyde (metal-oxide-semiconductor field-effect transistor), ou transistor MOSFET, ou transistor MOS. De plus, selon un exemple, le transistor T501 est un transistor MOS à canal P, ou transistor MOS de type P, ou transistor PMOS. Une borne d'entrée inverseuse (-) de l'amplificateur Amp501 est adaptée à recevoir la tension de référence VRef500, et une deuxième borne d'entrée non inverseuse (+) de l'amplificateur est reliée, de préférence connectée, à un noeud N501. Une borne de sortie de l'amplificateur Amp501 est adapté à commander l'interrupteur T501. Une première borne de conduction de l'interrupteur T501 est adaptée à recevoir la tension d'alimentation interne VCCnt120, et une deuxième borne de conduction de l'interrupteur T501 est adaptée à fournir la tension d'alimentation VDD130.

Selon un exemple, le régulateur 500 comprend, en outre, deux résistances R501 et R502. Une première borne de la résistance R501 est reliée, de préférence connectée, à la borne de conduction de l'interrupteur fournissant la tension d'alim VDD130, et une deuxième borne de la résistance R501 est reliée, de préférence connectée, au noeud N501. Une première borne de la résistance R502 est reliée, de préférence connectée, au noeud N501, et une deuxième borne de la résistance R502 est reliée, de préférence connectée, à noeud recevant un potentiel de référence, par exemple la masse.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en oeuvre pratique des modes de réalisation et variantes décrits est à la portée de la personne du métier à partir des indications fonctionnelles données ci-dessus.

## Revendications

1. Circuit d'alimentation d'un dispositif électronique adapté à recevoir de l'énergie de la part d'une première source d'énergie et de la part d'une deuxième source d'énergie (VCC100) différente de la première source d'énergie, ledit circuit d'alimentation comprend :
- un premier circuit de sélection (121 ; 200) de source d'énergie adapté à recevoir de l'énergie de la part de la première source d'énergie et de la deuxième source d'énergie, et à fournir une première tension d'alimentation (VCCint120) et un signal (VCC_path120) indiquant la source d'énergie fournissant ladite première tension d'alimentation (VCCint120) ; et
- un deuxième circuit (122 ; 300) adapté à comparer ladite première tension d'alimentation (VCCint120) à une première tension de référence (VRefRF100; VRefRF300; VRefRF500) ou à une deuxième tension de référence (VRefVCC100; VRefVCC300; VRefVCC500) en fonction d'une valeur dudit signal (VCC-_path120), si ladite première tension d'alimentation (VCCint120) est supérieure à ladite première ou deuxième tension de référence (VRefRF100, VRefVCC100; VRefRF300, VRefVCC300; VRefRF500, VRefVCC500), alors ladite première tension d'alimentation (VCCint120) est utilisée pour l'alimentation du dispositif électronique.

2. Procédé d'alimentation d'un dispositif électronique adapté à recevoir de l'énergie de la part d'une première source d'énergie et de la part d'une deuxième source d'énergie (VCC100) différente de la première source d'énergie, utilisant un circuit d'alimentation comprenant :
- un premier circuit de sélection (121 ; 200) de source d'énergie adapté à recevoir de l'énergie de la part de la première source d'énergie et de la deuxième source d'énergie, et à fournir une première tension d'alimentation (VCCint120) et un signal (VCC_path120) indiquant la source d'énergie fournissant ladite première tension d'alimentation (VCCint120) ; et
- un deuxième circuit (122 ; 300) adapté à comparer ladite première tension d'alimentation (VCCint120) à une première tension de référence (VRefRF100; VRefRF300; VRefRF500) ou à une deuxième tension de référence (VRefVCC100; VRefVCC300; VRefVCC500) en fonction d'une valeur dudit signal (VCC_path120), si ladite première tension d'alimentation (VCCint120) est supérieure à ladite première ou deuxième tension de référence (VRefRF100, VRefVCC100; VRefRF300, VRefVCC300; VRefRF500, VRefVCC500), alors ladite première tension d'alimentation (VCCint120) est utilisée pour l'alimentation du dispositif électronique.

3. Circuit selon la revendication 1, ou procédé selon la revendication 2, dans lequel la première source d'énergie est une source d'énergie sans fil.

4. Circuit selon la revendication 1 ou 3, ou procédé selon la revendication 2 ou 3, dans lequel la deuxième source d'énergie (VCC100) est une source d'énergie filaire.

5. Circuit selon l'une quelconque des revendications 1, 3 ou 4, ou procédé selon l'une quelconque des revendications 2 à 4, dans lequel ladite première tension de référence (VRefRF100; VRefRF300; VRefRF500) est associée à la première source d'alimentation (VCC100).

6. Circuit selon l'une quelconque des revendications 1, 3 à 5, ou procédé selon l'une quelconque des revendications 2 à 5, dans lequel ladite deuxième tension de référence (VRefVCC100; VRefVCC300; VRefVCC500) est associée à la deuxième source d'alimentation (VCC100).

7. Circuit selon l'une quelconque des revendications 1, 3 à 6, ou procédé selon l'une quelconque des revendications 2 à 6, dans lequel lorsque ledit signal indique que ladite première tension d'alimentation (VCCint120) est fournie par la première source d'alimentation (RF), alors le deuxième circuit (122 ; 300) compare ladite première tension d'alimentation à ladite première tension de référence (VRefRF100; VRefRF300; VRefRF500).

8. Circuit selon l'une quelconque des revendications 1, 3 à 7, ou procédé selon l'une quelconque des revendications 2 à 7, dans lequel lorsque ledit signal indique que ladite première tension d'alimentation (VCCint120) est fournie par la deuxième source d'alimentation (VCC), alors le deuxième circuit (122 ; 300) compare ladite première tension d'alimentation (VCCint120) à ladite deuxième tension de référence (VRefVCC100; VRefVCC300; VRefVCC500).

9. Circuit selon l'une quelconque des revendications 1, 3 à 8, ou procédé selon l'une quelconque des revendications 2 à 8, dans lequel ledit circuit d'alimentation (120) comprend, en outre, un régulateur de tension (124) adapté à convertir ladite première tension d'alimentation (VCCint120) en une deuxième tension d'alimentation (VDD130).

10. Circuit ou procédé selon la revendication 9, dans lequel ladite deuxième tension d'alimentation (VDD130) est inférieure à la première tension d'alimentation (VCCint120).

11. Circuit ou procédé selon la revendication 9 ou 10, dans lequel ledit régulateur de tension (124) est adapté à recevoir ledit signal (VCC_path120) et à modifier la valeur de la deuxième tension d'alimentation (VDD130) en fonction de la valeur transmise par ledit signal (VCC_path120).

12. Circuit selon l'une quelconque des revendications 1, 3 à 11, ou procédé selon l'une quelconque des revendications 2 à 11, dans lequel ledit circuit d'alimentation comprend, en outre, un circuit à bande interdite (123) adapté à fournir la première tension de référence (VRefRF100; VRefRF300; VRefRF500) et la deuxième tension de référence (VRefVCC100; VRefVCC300; VRefVCC500).

13. Dispositif électronique (100) comprenant un circuit d'alimentation selon l'une quelconque des revendications 1, 3 à 12.

14. Dispositif selon la revendication 13, comprenant une mémoire (130, 400) adaptée à recevoir ledit signal et comprenant des pompes de charges dont le fonctionnement est modifié par une valeur dudit signal.

15. Dispositif selon la revendication 13 ou 14, comprenant un générateur de signal d'horloge adapté à recevoir ledit signal.
